# EUROPEAN PATENT APPLICATION

(11) **EP 2 772 880 A1**
(43) Date of publication of application: **03.09.2014**
(21) Application number: 14156989.7
(22) Date of filing: 27.02.2014
(51) Int. Cl.: G06Q 10/06

(54) **Trace based reachability analysis in statecharts**

(30) Priority: 28.02.2013 IN MU06002013
(71) Applicant: Tata Consultancy Services Limited, 400021 Mumbay (IN)
(72) Inventor: Metta, Ravindra Kumar, 411013 Mumbai (IN); Madhukar, Kumar, 411013 Mumbai (IN); Shrotri, Ulka Aniruddha, 411013 Mumbai (IN); R, Venkatesh, 411013 Mumbai (IN)
(74) Representative: Lloyd, Patrick Alexander Desmond

(57) **Abstract**

Disclosed is a method and system for verifying a statechart model (M) having one or more statecharts (S) and a set of traces (T). From the given set of traces (T), a designating module designates a trace as candidates trace (Tᵣ). Based on the candidate trace (Tᵣ), the abstraction module generates an abstract model (M_{A}) by categorizing number of states of the each statechart (S) into at most three categories of states. Thereafter, the model checking module runs a bounded model checker (MC) upon the abstract model (M_{A}) for obtaining a trace (T_{A}) such that a set of transitions in the trace (T_{A}) is a set of potentially transitions of a valid path for the unreached states in the statechart model (M). Further, a path concretization module verifies the reachability of the unreached states by incrementally constructing a concrete path using the potential transitions.

## Description

### TECHNICAL FIELD

The present subject matter described herein, in general, relates to a method and a system for providing verification of a statechart model.

### BACKGROUND

Statecharts are generally used for describing the behavior of reactive or embedded systems. These reactive systems have to comply with some requirements and hence need to be verified. A statechart comprises of set of states and transitions, each state describing the different modes of the reactive system. As a part of verifying the reactive system, each statechart in the system should comply with some specific requirements. Generally, the size of the reactive systems is huge and depends upon the number of components. Due to increasing size of these reactive systems, the size of the corresponding statechart model used for describing their behavior also increases. The increase in the size of the statechart model leads to the state-explosion problem during verification of the system.

State-explosion is a fundamental problem faced during the verification of the statechart model. State-space grows exponentially with the size of models. Due to the state-explosion problem, search space in the statechart model drastically increases. With the drastic increase of the search space, verification and validation of the requirements of the industry-scale models becomes complex. Various model checking tools and techniques are available for performing the verification of the statechart models. These tools determine whether the statechart model satisfies the requirements of the reactive systems or not. To verify the reachability requirement of all the states of the statechart model during the model checking, an exhaustive search needs to be performed to check the reachability of all the states. During model checking, size of the statechart model is a big concern. Thus, the statechart model becomes complex due to the vast number of states.

Due to the state explosion problem, the existing systems and methods take longer time for analyzing and verifying the models. Further, the existing systems and methods may sometimes also run out the memory. So, the issue of scalability still remains leading to a need of scalable technique and tool for verifying the statechart models. Thus, considering the scalability concerns in the existing systems and methods, there is a need of scalable method and a scalable system for verifying the statechart models.

### SUMMARY

This summary is provided to introduce aspects related to systems and methods for verifying the statechart model by categorizing the number of states in the statechart model and the concepts are further described below in the detailed description. This summary is not intended to identify essential features of the claimed subject matter nor is it intended for use in determining or limiting the scope of the claimed subject matter.

In one implementation, a scalable system for verifying the statechart model (M) having one or more statecharts (S) and a set of traces (T) is disclosed. The scalable system comprises a processor and a memory coupled to the processor for executing a set of modules stored in the memory. The set of modules comprises a designating module, an abstraction module, a model checking module and a path concretization module. The designating module is configured to designate a trace from the set of traces (T) as a candidate trace (Tᵣ). The candidate trace (Tᵣ) has an unreached state as an immediate successor of a last reached state in the statechart model (M). Further, the abstraction module is configured to generate an abstract model (M_{A}), based on the candidate trace (Tᵣ), for the statechart model (M). The abstract model (M_{A}) is generated by categorizing the number of states of the each statechart (S) into at most three categories of states, the three categories of states includes a current state (C), a history state (H) and a future state (F). The current state (C) corresponds to a last reached state of the statechart (S) and the current state (C) is also considered as an initial state for constructing the abstraction model (M_{A}). The history state (H) corresponds to all reached states of the statechart (S) except the current state (C). The future state (F) corresponds to one or more unreached states of the statechart (S). The model checking module is configured to run a bounded model checker (MC) upon the abstract model (M_{A}) for obtaining a trace (T_{A}) in the abstract model such that a set of transitions in the trace (T_{A}) is potentially a subset of a set of transitions in a valid path from the current state (C) to the future state (F) in the statechart model (M). At a certain stage, the bounded model checker (MC) fails to obtain the trace (T_{A}) when the candidate trace (Tᵣ) does not extend from the current state (C) to any state in the future state (F) in the statechart model (M). Further, the path concretization module is configured to verify the reachability of the future states (F) in the statechart model (M) by incrementally constructing a concrete path. The concrete path is constructed using the set of transitions in the trace (T_{A}).

In another implementation, a scalable method for verifying a statechart model (M) having one or more statecharts (S) and a set of traces (T) is disclosed. According to the method of the invention, a trace from the set of traces (T) is selected and designated as a candidate trace (Tᵣ). The candidate trace (Tᵣ) comprises an unreached state as an immediate successor of a last reached state in the statechart model (M). Further, an abstract model (M_{A}) for the statechart model (M) is generated based on the candidate trace (Tr). The abstract model (M_{A}) is generated by categorizing number of states of the each statechart (S) into at most three categories of states, the three categories of states includes a current state (C), a history state (H) and a future state (F). The current state (C) corresponds to a last reached state of the statechart (S). The current state (C) is also considered as an initial state for constructing the abstraction model (M_{A}). The history state (H) corresponds to all reached states of the statechart (S) except the current state (C). The future state (F) corresponds to one or more unreached states of the statechart (S). Thereafter, a bounded model checker (MC) is executed upon the abstract model (M_{A}) for obtaining a trace (T_{A}) in the abstract model (M_{A}). The trace (T_{A}) is a potential subset of a set of transitions in a valid path from the current state (C) to the future state (F) in the statechart model (M). The model checker fails to obtain the trace (T_{A}) when the candidate trace (Tᵣ) does not extend from the current state (C) to any state in the future state (F) in the statechart model (M). After obtaining the trace (T_{A}) in the abstract model (M_{A}), step of verifying the reachability of the future state (F) in the statechart model is implemented (M) by incrementally constructing a concrete path. The concrete path is constructed using the set of transitions in the trace (T_{A}). The method for the designating, the generating, the running and the verifying are performed by the processor.

Yet in another implementation, computer program product having embodied thereon a computer program for verifying a statechart model (M) having one or more statecharts (S) and a set of traces (T) is disclosed. The computer program product comprises a program code for designating a trace from the set of traces (T) as a candidate trace (Tᵣ). The candidate trace (Tᵣ) has an unreached state as an immediate successor of a last reached state in the statechart model (M). A program code is configured for generating an abstract model (M_{A}) for the statechart model (M) based on the candidate trace (Tr). The abstract model (M_{A}) is generated by categorizing number of states of the each statechart (S) into at most three categories of states, the three categories of states includes a current state (C), a history state (H) and a future state (F). A program code is configured for running a bounded model checker (MC) upon the abstract model (M_{A}) for obtaining a trace (T_{A}) in the abstract model (M_{A}), wherein, the trace (T_{A}) represents a potential subset of a set of transitions in a valid path from the current state (C) to the future state (F) in the statechart model (M). A program code is further configured for verifying, by the processor, reachability of the future state (F) in the statechart model (M) by incrementally constructing a concrete path. The concrete path is constructed using the set of transitions in the trace (T_{A}).

### BRIEF DESCRIPTION OF THE DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1 illustrates a network implementation of a system for verifying a statechart model (M) is shown, in accordance with an embodiment of the present subject matter.
Figure 2 illustrates the system, in accordance with an embodiment of the present subject matter.
Figure 3 illustrates a detailed working of the system, in accordance with an embodiment of the present subject matter.
Figure 4 illustrates a method for verifying a statechart model (M) by extending the traces to reach the unreached states of the statechart model (M), in accordance with an embodiment of the present subject matter.

### DETAILED DESCRIPTION

Systems and methods for verifying a statechart model (M) have been disclosed. The statechart model (M) comprises of one or more statecharts (S) and set of traces

(T). In order to verify the statechart model (M), the objective is to extend the traces from the set of traces (T) to reach all unreached states of the statechart model (M). From the given set of traces (T), a trace is designated as a candidate trace (Tᵣ), wherein the candidate trace (Tᵣ) has an unreached state as an immediate successor of a last reached state in the statechart model (M). The candidate trace (Tᵣ) may be obtained by running a bounded model checker with a small depth for state reachability or by using the traces produced by production test data.

Based upon the candidate trace (Tᵣ), an abstract model (M_{A}) for the statechart model (M) is generated. The abstract model (M_{A}) is generated by categorizing number of states of the each statechart (S) into at most three categories of states, the three categories of states includes a current state (C), a history state (H) and a future state (F). The current state (C) corresponds to a last reached state of the statechart (S). The current state (C) is also considered as an initial state for constructing the abstract model (M_{A}). Further, the history state (H) corresponds to all reached states of the statechart (S) except the current state (C). The future state (F) corresponds to one or more unreached states of the statechart (S). Since (F) corresponds to the one or more unreached states, verification is performed to verify the reachability of all the unreached states in the future state (F) of the statechart model (M). Set of transitions of the statechart model (M) is added to the abstract model (M_{A}) that directly impact the reachability of the one or more unreached states which corresponds to the future state (F) except in two cases. First, when the transition's source state is an unreached state or secondly when the transition's source state is already reached in the designated candidate trace (Tᵣ), but its target is neither a reached state nor an unreached immediate successor of the current state (C). Second, for those transitions which do not impacts the reachability of the future state (F) are discarded. The discarded transitions are those transitions which can never be taken starting from the current state (C) without reaching the state represented by future state (F).

Upon generating the abstract model (M_{A}), a bounded model checker (MC) with bound (k) is run upon the abstract model (M_{A}) for obtaining a trace (T_{A}) in the abstract model (M_{A}). A set of transitions in the trace (T_{A}) is potentially a subset of a set of transitions in a valid path from the current state (C) to the future state (F) in the statechart model (M). In case if no trace is obtained after running the bounded model checker (MC), it means that the candidate trace (Tᵣ) does not extend from the current state (C) to any of a future state of the statechart model (M).

After obtaining the trace (T_{A}), verification of the reachability of the future state (F) in the statechart model (M) is performed by incrementally constructing a concrete path. The concrete path is constructed using the set of transitions in the trace (T_{A}). Thus, the present subject matter discloses a scalable method and scalable system for verifying the statechart model (M) by categorizing the states while generating the abstract model (M_{A}) and thereafter, obtaining the trace (T_{A}) and its corresponding set of transitions to further construct the concrete path to reach all the unreached states of the statechart model (M).

While aspects of described system and method for verifying the statechart (M) by extending the traces to reach the unreached states of the statechart model (M) may be implemented in any number of different computing systems, environments, and/or configurations, the embodiments are described in the context of the following exemplary system.

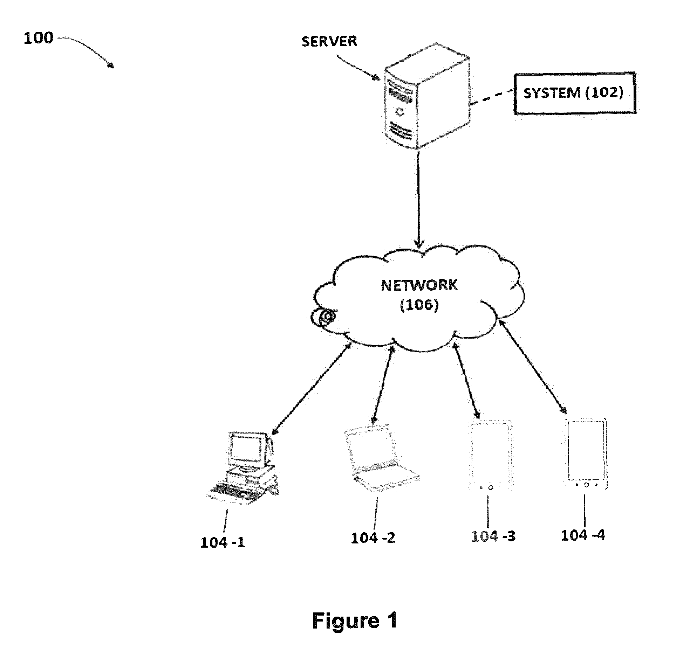

Referring now to Figure 1, a network implementation 100 of system 102 for verifying a statechart model (M) is illustrated, in accordance with an embodiment of the present subject matter. In one embodiment, the system 102 facilitates the verification of the statechart model (M), wherein the statechart model (M) comprises of one or more statecharts and the set of traces (T).

Although the present subject matter is explained considering that the system 102 is implemented for statechart model verification on a server, it may be understood that the system 102 may also be implemented in a variety of computing systems, such as a laptop computer, a desktop computer, a notebook, a workstation, a mainframe computer, a server, a network server, and the like. It will be understood that the system 102 may be accessed by multiple users through one or more user devices 104-1, 104-2...104-N, collectively referred to as user 104 hereinafter, or applications residing on the user devices 104. Examples of the user devices 104 may include, but are not limited to, a portable computer, a personal digital assistant, a handheld device, and a workstation. The user devices 104 are communicatively coupled to the system 102 through a network 106.

In one implementation, the network 106 may be a wireless network, a wired network or a combination thereof. The network 106 can be implemented as one of the different types of networks, such as intranet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

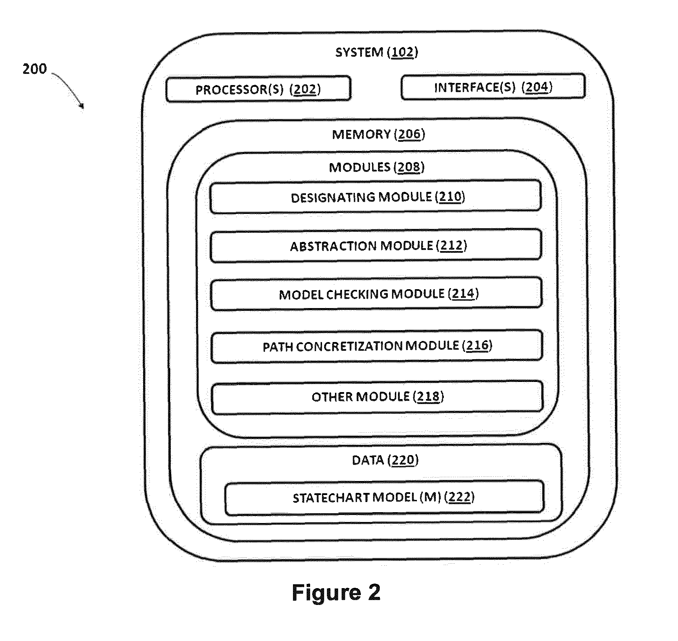

Referring now to Figure 2, the system 102 is illustrated in accordance with an embodiment of the present subject matter. In one embodiment, the system 102 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, the at least one processor 202 is configured to fetch and execute computer-readable instructions or modules stored in the memory 206.

The I/O interface 204 may include a variety of software and hardware interfaces, for example, a web interface, a graphical user interface, and the like. The I/O interface 204 may allow the system 102 to interact with a user directly or through the client devices 104. Further, the I/O interface 204 may enable the system 102 to communicate with other computing devices, such as web servers and external data servers (not shown). The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium or computer program product known in the art including, for example, volatile memory, such as static random access memory (SRAM) and dynamic random access memory (DRAM), and/or nonvolatile memory, such as read only memory (ROM), erasable programmable ROM, flash memories, hard disks, optical disks, a compact disks (CDs), digital versatile disc or digital video disc (DVDs) and magnetic tapes. The memory 206 may include modules 208 and data 220.

The modules 208 include routines, programs, objects, components, data structures, etc., which perform particular tasks or implement particular abstract data types. In one implementation, the modules 208 may include a designating module 210, an abstraction module 212, a model checking module 214, a path concretization module 216 and other modules 218. The other modules 218 may include programs or coded instructions that supplement applications and functions of the system 102.

The data 220, amongst other things, serves as a repository for storing data processed, received, and generated by one or more of the modules 208. The data 220 may also include one or more statechart model (M) 222 to be verified.

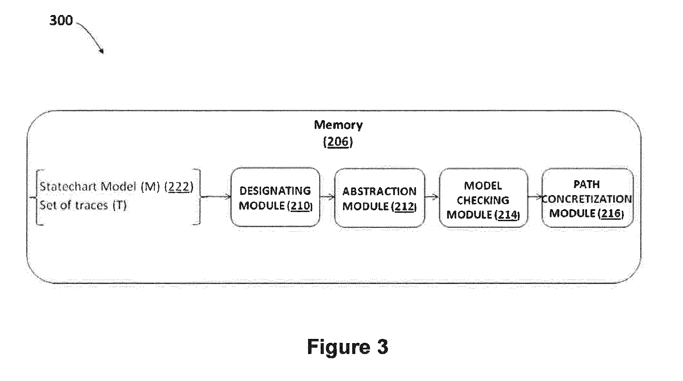

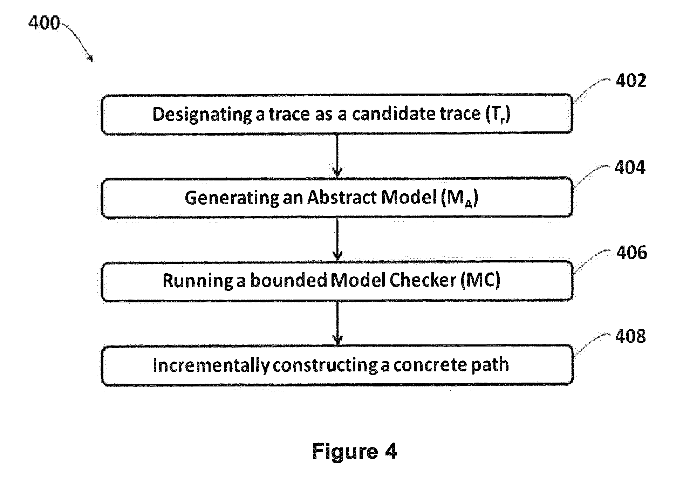

In one implementation, at first, a user may use the client device 104 to access the system 102 via the I/O interface 204. The users may register them using the I/O interface 204 in order to use the system 102. The working of the system 102 may be explained in detail in Figures 3 and 4 explained below. The system 102 may be used for verifying the statechart model (M) by categorizing the number of states in the statechart (S), thus reducing the size of the statechart and reducing the search space thereof. During the verification of the statechart model (M), the system 102 focuses only on the unreached states and their corresponding transitions which may help in reaching the unreached states.

Referring to Figure 3, a detailed working of the system 102 is illustrated, in accordance with an embodiment of the present subject matter. For the given statechart model (M) 222 having one or more statecharts (S) and the set of traces (T), the designating module 210 stored in the memory 206 of the system 102 is configured to designate a trace from the set of traces (T) as a candidate trace (Tᵣ). In one implementation, the candidate trace (Tᵣ) can be obtained by running a bounded model checker or by using the traces produced during testing, as part of the model development process. The candidate trace (Tᵣ) is selected has an unreached state as an immediate successor of a last reached state in the statechart model (M).

Based upon the candidate trace (Tᵣ), an abstraction module 212 is configured to generate an abstract model (M_{A}) for the statechart model (M). The abstract model (M_{A}) is generated by categorizing the number of states of the each statechart (S) into at most three categories of states, the three categories of states may include a current state (C), a history state (H) and a future state (F). The current state (C) corresponds to a last reached state of the statechart (S) and also the current state (C) is considered as an initial state for constructing the abstract model (M_{A}). The history state (H) corresponds to all reached states of the statechart (S) except the current state (C). The future state (F) corresponds to one or more unreached states of the statechart (S). Since (F) corresponds to the one or more unreached states, verification is performed on the one or more unreached states to verify the reachability of future state (F) in the statechart model (M). Thus, by categorizing the states of the statechart model (M), the system 102 considers only the unreached states of the future states (F) for verification purpose.

After generating the abstract model (M_{A}), the model checking module 214 is configured to run a bounded model checker (MC) upon the abstract model (M_{A}) for obtaining a trace (T_{A}) in the abstract model (M_{A}). The trace (T_{A}) has a set of transitions which is potentially a subset of a set of transitions representing a valid path from the current state (C) to the future state (F) in the statechart model (M). Due to the categorization of the states in the statechart model (M) which is done by generating the abstract model (M_{A}), only the set of transitions which directly impacts the reachability of the unreached states are considered by the system 102. Similarly, the set of transitions which do not affect the reachability of the unreached states gets eliminated. At some point, the bounded model checker (MC) fails to obtain the trace (T_{A}) when the candidate trace (Tᵣ) does not extend from the current state (C) to any state in the future state (F) in the statechart model (M). The transitions between the current state (C) and its successors are included in the abstract model (M_{A}), wherein the included transitions have all the unreached states as their target states. Therefore the system 102 only concentrates on the appropriate portion i.e., the set of transitions which are potential for reaching the unreached states of the statechart model (M) to perform the verification. Thus, due to the elimination of the unwanted set of transitions, the size of the statechart model (M) get reduced and therefore reducing the search space. The reduction in the size of the search space enables the system 102 to accelerate the verification process of the statechart model (M).

Upon obtaining the trace (T_{A}) in the abstract model (M_{A}), the path concretization module is configured to verify the reachability of the future states (F) i.e., the unreached states in the statechart model (M) by incrementally constructing a concrete path. The concrete path is constructed using the set of transitions in the trace (T_{A}) which are considered as the potential transitions from the set of transitions in a valid path from the current state (C) to the future state (F) in the statechart model (M). Thus, by obtaining the trace (T_{A}) at each time after running the bounded model checker (MC) and by constructing the concrete path the verification of the unreached states in the statechart model (M) is performed by the system 102.

Referring now to Figure 4, the method for verifying the statechart model (M) by extending the traces to reach the unreached states of the statechart model (M) is shown, in accordance with an embodiment of the present subject matter. The method 400 may be described in the general context of computer executable instructions. Generally, computer executable instructions can include routines, programs, objects, components, data structures, procedures, modules, functions, etc., that perform particular functions or implement particular abstract data types. The method 400 may also be practiced in a distributed computing environment where functions are performed by remote processing devices that are linked through a communications network. In a distributed computing environment, computer executable instructions may be located in both local and remote computer storage media, including memory storage devices.

The order in which the method 400 is described is not intended to be construed as a limitation, and any number of the described method blocks can be combined in any order to implement the method 400 or alternate methods. Additionally, individual blocks may be deleted from the method 400 without departing from the spirit and scope of the subject matter described herein. Furthermore, the method can be implemented in any suitable hardware, software, firmware, or combination thereof. However, for ease of explanation, in the embodiments described below, the method 400 may be considered to be implemented in the above described system 102.

At block 402, a trace from the given set the traces (T) of the statechart model (M) is designated as a candidate trace (Tᵣ). The candidate trace (Tᵣ) has an unreached state as an immediate successor of a last reached state in the statechart model (M). For obtaining the candidate trace (Tᵣ) from the given statechart model (M), the system 102 runs a bounded model checker upon the given statechart model (M). The candidate trace may also be obtained by using the traces produced during testing, as part of the model development process.

At block 404, an abstract model (M_{A}) is generated based on the candidate trace (Tᵣ). The abstract model (M_{A}) is generated by categorizing the number of states of the statechart (S) into at most three categories of states. The categorized three categories of the states include a current state (C), a history state (H) and a future state (F). The current state (C) corresponds to a last reached state of the statechart (S), and also the current state (C) is considered as an initial state for constructing the abstract model (M_{A}). The history state (H) corresponds to all reached states of the statechart (S) except the current state (C) and the future state (F) corresponds to one or more unreached states of the statechart (S).

At block 406, a trace (T_{A}) is obtained by running a bounded model checker (MC) on the abstract model (M_{A}) generated in the block 404. The trace (T_{A}) represents a set of transitions which is potentially a subset of a set of transitions which represents a valid path from the current state (C) to the future state (F) in the statechart model (M). Thus, only that transitions which affects the reachability of the unreached states of the statechart model (M) is considered for verification. At a particular point, during the verification of the statechart model (M) the bounded model checker (MC) fails to obtain the trace (T_{A}) only when candidate trace (Tᵣ) does not extend from the current state (C) to any state in the future state (F) in the statechart model (M).

At block 408, based on the trace (T_{A}) obtained after running the bounded model checker (MC) on the abstract model (M_{A}), a concrete path is incrementally constructed for verifying the reachability of all the unreached states which are categorized in the future state (F). The concrete path is constructed using a set of transitions in the trace (T_{A}) which are considered as the potential transitions from the set of transitions in a valid path from the current state (C) to the future state (F) in the statechart model (M). The set of transitions in the trace (T_{A}) is considered to reach all the unreached states from the current state (C) to the future state (F). Thus, by obtaining the trace (T_{A}) at each time after running the bounded model checker (MC) and by constructing the concrete path, the verification of the unreached states in the statechart model (M) is performed by the system 102.

### ADVANTAGES OF THE SYSTEM

The system 102 provides a scalable method for verification of the statechart model (M). In combination of the history abstraction and trace based verification technique, the present subject matter is capable for addressing the state explosion problem by reducing the size of the given statechart model (M) and thus reducing the search space thereof.

Although implementations for methods and systems for dynamically generating a playlist of multimedia files based upon user's mood have been described in language specific to structural features and/or methods, it is to be understood that the appended claims are not necessarily limited to the specific features or methods described. Rather, the specific features and methods are disclosed as examples of implementations for verifying the statechart model (M) by extending the traces to reach all the unreached states of the statechart model (M).

## Claims

1. A method for verifying a statechart model (M) having one or more statecharts (S) and a set of traces (T), the method comprising:
designating a trace from the set of traces (T) as a candidate trace (Tᵣ), wherein the candidate trace (Tᵣ) has an unreached state as an immediate successor of a last reached state in the statechart model (M);
generating an abstract model (M_{A}) for the statechart model (M) based on the candidate trace (Tr), wherein the abstract model (M_{A}) is generated by categorizing number of states of the each statechart (S) into at most three categories of states, the three categories of states includes a current state (C), a history state (H) and a future state (F);
running a bounded model checker (MC) upon the abstract model (M_{A}) for obtaining a trace (T_{A}) in the abstract model (M_{A}), such that a set of transitions in the trace (T_{A}) is potentially a subset of a set of transitions in a valid path from the current state (C) to the future state (F) in the statechart model (M); and
verifying reachability of the future state (F) in the statechart model (M) by incrementally constructing a concrete path, wherein the concrete path is constructed using the set of transitions in the trace (T_{A}), wherein the designating, the generating, the running and the verifying are performed by a processor.

2. The method of claim 1, wherein:
the current state (C) corresponds to a last reached state of the statechart (S), said current state (C) is also considered as an initial state for constructing the abstract model (M_{A});
the history state (H) corresponds to all reached states of the statechart (S) except the current state (C); and
the future state (F) corresponds to one or more unreached states of the statechart (S);

3. The method of claim 1, wherein the model checker fails to obtain the trace (T_{A}) when the candidate trace (Tᵣ) does not extend from the current state (C) to any unreached state in the statechart model (M).

4. A system for verifying a statechart model (M) having one or more statecharts (S) and a set of traces (T), the system comprising:
a processor;
a memory coupled to the processor, wherein the memory stores set of modules being executed by the processor, the set of modules further comprising:
a designating module configured to designate a trace from the set of traces as a candidate trace (Tᵣ), wherein the candidate trace (Tᵣ) has an unreached state as an immediate successor of a last reached state in the statechart model (M);
an abstraction module configured to generate an abstract model (M_{A}), based on the candidate trace (Tᵣ), for the statechart model (M), wherein the abstract model (M_{A}) is generated by categorizing the number of states of the each statechart (S) into at most three categories of states, the three categories of states includes a current state (C), a history state (H) and a future state (F);
a model checking module configured to run a bounded model checker (MC) upon the abstract model (M_{A}) for obtaining a trace (T_{A}) in the abstract model (M_{A}) such that a set of transitions in the trace (T_{A}) is potentially a subset of a set of transitions in a valid path from the current state (C) to the future state (F) in the statechart model (M); and
a path concretization module configured to verify the reachability of the future states (F) in the statechart model (M) by incrementally constructing a concrete path, wherein the concrete path is constructed using the set of transitions in the trace (T_{A}).

5. The system of claim 4, wherein:
the current state (C) corresponds to a last reached state of the statechart (S), said current state (C) is also considered as an initial state for constructing the abstract model (M_{A});
the history state (H) corresponds to all reached states of the statechart (S) except the current state (C); and
the future state (F) corresponds to one or more unreached states of the statechart (S);

6. The system of claim 4, wherein the bounded model checker (MC) fails to obtain the trace (T_{A}) when the candidate trace (Tᵣ) does not extend from the current state (C) to any state in the future state (F) in the statechart model (M).

7. A computer program product having embodied thereon a computer program for verifying a statechart model (M) having one or more statecharts (S) and a set of traces (T), the computer program product comprising:
a program code for designating a trace from the set of traces (T) as a candidate trace (Tᵣ), wherein the candidate trace (Tᵣ) has an unreached state as an immediate successor of a last reached state in the statechart model (M);
a program code for generating an abstract model (M_{A}) for the statechart model (M) based on the candidate trace (Tr), wherein the abstract model (M_{A}) is generated by categorizing number of states of the each statechart (S) into at most three categories of states, the three categories of states includes a current state (C), a history state (H) and a future state (F);
a program code for running a bounded model checker (MC) upon the abstract model (M_{A}) for obtaining a trace (T_{A}) in the abstract model (M_{A}), such that a set of transitions in the trace (T_{A}) is potentially a subset of a set of transitions in a valid path from the current state (C) to the future state (F) in the statechart model (M); and
a program code for verifying, by the processor, reachability of the future state (F) in the statechart model (M) by incrementally constructing a concrete path, wherein the concrete path is constructed using the set of transitions in the trace (T_{A}).
